# EUROPÄISCHE PATENTSCHRIFT

(11) **EP 2 535 227 B1**
(45) Veröffentlichungstag und Bekanntmachung des Hinweises auf die Patenterteilung: **24.02.2016**
(21) Anmeldenummer: 12003629.8
(22) Anmeldetag: 09.05.2012
(51) Int. Cl.: B60R 21/015, B60N 2/00

(54) **Verfahren zum Detektieren des Belegungszustandes eines Sitzes sowie Sitz mit einer Belegungserfassungseinrichtung**
Procedure for detecting the occupation state of a seat and seat with an occupation detection device
Procédé de détection de l'occupation d'un siège et siège avec un dispositif de détection d'occupation

(30) Priorität: 15.06.2011 DE 202011102827 U
(43) Veröffentlichungstag der Anmeldung: 19.12.2012
(73) Patentinhaber: I.G. Bauerhin GmbH, 63584 Gründau (DE)
(72) Erfinder: Michelmann, Jochen, 63571 Gelnhausen (DE)
(74) Vertreter: Grimm, Ekkehard

(56) Entgegenhaltungen:
- EP-A1- 1 492 136
- DE-A1-102008 006 139
- DE-U1-202005 000 018
- US-A1- 2004 145 165

## Beschreibung

Die vorliegende Erfindung betrifft ein Verfahren zum Detektieren des Belegungszustands eines Sitzes gemäß dem Oberbegriff des Anspruchs 1 sowie einen Sitz mit einer Belegungserfassungseinrichtung gemäß dem Oberbegriff des Anspruchs 2.

Belegungserfassungseinrichtungen werden unter anderem in Sitze von Kraftfahrzeugen aus Gründen der aktiven und passiven Sicherheit der Fahrzeuginsassen eingebaut. Solche der Sitzbelegungserfassung dienende Einrichtungen sind heutzutage Standart in vielen Neufahrzeugen. Die Sitzbelegungserfassungseinrichtung dient unter anderem dazu, den Fahrzeuginsassen darauf hinzuweisen, einen Sicherheitsgurt anzulegen und/oder dem Fahrzeugsicherheitssystem eine Information über die aktuelle Sitzbelegung zu geben. Dabei ist aber zu unterscheiden, ob der Sitz tatsächlich durch eine Person belegt ist oder ob auf dem Sitz nur Gegenstände abgelegt sind. Diese Sitzbelegungszustände müssen eindeutig erkannt werden.

Eine Art einer solchen Belegungserfassungseinrichtung umfasst eine Vielzahl von druckempfindlichen Sensorelementen, die zwischen Bezug und Polsterkern angebracht sind. Solche Sensorelemente können als Drucksensoren mit zwei übereinander liegenden und mittels Abstandsmaterial auf Abstand gehaltenen Folien ausgeführt sein. Belegungserfassungseinrichtungen werden üblicherweise im hinteren, mittleren Bereich zwischen Bezug und Polsterkern angeordnet und können den durch eine Person über die Sitzfläche auf den Polsterkern ausgeübten Druck erfassen.

Es ist auch bekannt, dass solche Drucksensoren in den Polsterkern integriert sind.

Weiterhin ist bekannt, dass solche Drucksensoren zwischen Polsterkern und Sitztragestruktur angeordnet und befestigt sind.

Aus der DE 20 2005 000 018 U1 ist eine Sensormatte bekannt, die eine Vielzahl von Sensorzellen umfasst, die derart ausgestaltet und untereinander verschaltet sind, dass ein Ausgangssignal der Sensormatte in Abhängigkeit von der Sitzbelegungssituation variiert, so dass beim gleichzeitigen Auslösen der ersten und der zweiten Sensorzelle ein Ausgangssignal der Sensormatte einen vorgegeben Schwellenwert über- bzw. unterschreitet. Diese Sensormatte soll, entsprechend der Aufgabenstellung, sowohl für die Erkennung einer Sitzbelegung zum Auslösen eines Sicherheitsgurt-Warnsystems (eine nicht-sicherheitskritische Anwendung) als auch für die Erkennung einer Sitzbelegung zum Auslösen eines Airbag-Sicherheitssystems (sicherheitskritische Anwendung) geeignet sein. Hierzu besitzt die Sensormatte zwei unterschiedliche Schaltschwellen, die je nach den Anforderungen der einzelnen Anwendungen unabhängig voneinander eingestellt werden können. In einer ersten Schaltungsmöglichkeit kann keine oder nur eine der Sensorzellen eines Sensorzellenpaars ausgelöst sein; letzteres entspricht einem Zustand "1", belegt, erhalten durch eine ODER-Verknüpfung. In einer zweiten Schaltungsmöglichkeit wird das Ausgangssignal der Sensormatte geändert und passiert den vorgegebenen Schwellenwert, wenn sowohl die erste als auch die zweite Sensorzelle ausgelöst ist; dies entspricht einer UND-Verknüpfung und einem Zustand "1", belegt. Sobald eine der Sensorzellen, die auf Durchgang geschaltet ist, wieder zurückgesetzt wird (kein Durchgang), wird unmittelbar der "belegt" Zustand des Sensorzellenpaars wieder auf "0" (nicht belegt) zurückgesetzt. Dieses Zurücksetzen auf "0" (nicht belegt) erfolgt sowohl bei der UND-Verknüpfung als auch bei der ODER-Verknüpfung der Sensorzellen. Somit wird immer dann der "belegt" Zustand zurückgesetzt, wenn die auf eine Sensorzelle des Sensorzellenpaars einwirkende Kraft die Schaltschwelle dieser Sensorzelle wieder unterschreitet.

Die US 2004/145165 A1 beschreibt ein Airbagsystem mit einem Gewichtssensor und einem Controller, wobei der Controller zwischen einem Entfaltungszustand und einem Nicht-Entfaltungszustand, der abhängig eines durch den Gewichtssensor detektierten Gewichts unterscheidet, schaltet. Der Controller schaltet somit zwischen zwei Schaltschwellen (th1, th2); der Entfaltungszustand liegt vor, wenn das detektierte Gewicht größer oder gleich des ersten Schwellwerts ist. Der Nicht-Entfaltungszustand liegt vor, wenn das detektierte Gewicht kleiner als der zweite Schwellwert ist. Es liegt hierbei nur eine Art von Gewichtssensoren (Analogsensoren) vor, die linear arbeiten. Den Signalen dieser Gewichtssensoren wird erst in der Controllereinheit ein Schwellwert zugeordnet und ausgewertet. Erst die Controllereinheit weist den Signalen der Gewichtssensoren eine erste und eine zweite Schaltschwelle mit der sich daraus ergebenden Hysterese zu.

Aus der DE 10 2008 006 139 A1 ist ein Fahrzeugsitz bekannt, bei dem ein erster Sitzsensor an einem Mittelabschnitt des Sitzbereichs angeordnet ist, mit dem eine erste Sitzposition eines Insassen detektiert werden soll. Ein zweiter Sitzsensor ist an einem Umfangsabschnitt des Sitzpolsterbereichs angeordnet und kann eine zweite Sitzposition des Insassen detektieren.

Anordnungen, wie sie vorstehend beschrieben sind, haben den Nachteil, dass eine Sitzbelegung aufgrund des auf die Sitzfläche durch eine Person einwirkenden Gewichts nicht immer eindeutig zu bestimmen ist, insbesondere dann nicht, wenn eine Person keine ideale Sitzposition einnimmt. Auch kann es zu Lastwechseln auf einer Sitzfläche des Polsterkerns kommen, die durch fahrdynamische Beschleunigungskräfte hervorgerufen werden, die eine Schaltschwelle über- bzw. unterschreiten können, selbst wenn die statischen Gewichte diese Schaltschwelle noch nicht erreichen. Während der Fahrt kann, je nach Geländebeschaffenheit, die Schaltschwelle jedoch kurzzeitig überschritten werden, was zu einer temporären Fehldetektion des Sitzbelegungssensors führt. Da sich die Schaltschwellen der Sitzbelegungssensoren unter Temperatureinfluss verändern können, können auch leichte Gegenstände, bei hohen Umgebungstemperaturen, zur Fehldetektion führen.

Der vorliegende Erfindung liegt nun die Aufgabe zugrunde, ein Verfahren zum Detektieren des Belegungszustands eines Sitzes sowie einen Sitz mit einer Belegungserfassungseinrichtung zu schaffen, die stabile und für einen großen Temperaturbereich eindeutige und reproduzierbare Ausgangssignale an eine entsprechende Auswerteeinheit liefern. Des Weiteren sollen durch die Fahrdynamik verursachte, zusätzliche Kräfte zu keiner temporären Fehldetektion führen.

Die vorliegende Aufgabe wird durch ein Verfahren mit den Merkmalen des Anspruchs 1 und durch einen Sitz mit den Merkmalen des Anspruchs 2 gelöst.

Vorteilhafte Ausgestaltungen des Sitzes ergeben sich aus den abhängigen Ansprüchen.

Erfindungsgemäß weist ein Sitz mit einer Belegungserfassungseinrichtung zum Detektieren des Belegungszustandes eines Kraftfahrzeugsitzes mindestens einen Drucksensor auf, der mindestens ein erstes Sensorelement und mindestens ein zweites Sensorelement umfasst. Der Drucksensor ist zwischen einem Sitzbezug und einem Polsterkern, auch als A-Seite bezeichnet, oder zwischen einem Polsterkern und einer den Polsterkern aufnehmenden Struktur, auch als B-Seite bezeichnet, angeordnet. Wesentlich ist, dass mindestens zwei Sensorelemente vorgesehen sind, die zwei unterschiedliche Auslöseempfindlichkeiten aufweisen. Das erste Sensorelement besitzt eine erste Auslöseempfindlichkeit, die durch eine erste durch Druck ausgeübte Schaltschwelle vorgegeben ist, und das zweite Sensorelement besitzt eine zweite Auslöseempfindlichkeit, die durch eine zweite durch Druck ausgeübte Schaltschwelle vorgegeben ist. Darüber hinaus ist die erste Auslöseempfindlichkeit höher als die zweite Auslöseempfindlichkeit und entsprechend ist die erste Schaltschwelle niedriger als die zweite Schaltschwelle. Das Erreichen der zweiten Schaltschwelle wird als ein Triggersignal für den Zustand "belegt" herangezogen. Dieser Zustand wird erst dann zurückgesetzt, wenn die erste Schaltschwelle des mindestens einen ersten Sensorelements wieder unterschritten wird. Somit wird ein Zustand "belegt" angenommen, der so lange anhält, bis wieder die erste Schaltschwelle erreicht bzw. unterschritten ist. Dadurch wird auch bei Entlastung durch eine Person und bei einem Triggersignal der zweiten Schaltschwelle keine Änderung des Zustands "belegt" erfolgen. Erst wenn die erste Schaltschwelle wieder unterschritten wird, wird der Zustand "belegt" aufgehoben. Die erste Schaltschwelle des ersten Sensorelements ist dazu derart eingestellt, dass sie nur dann unterschritten werden kann, wenn die Person den Sitz verlässt.

In einer möglichen Ausgestaltung weist das erste Sensorelement eine Schaltschwelle von 10Kg und das zweite Sensorelement eine Schaltschwelle von 40Kg auf; damit wird die 5 Perzentil Frau (PART 571 - Federal Motor Vehicle Safety Standards [FMVSS] Sec. 208 Occupant crash detection) in jedem Fall erkannt; und der Zustand "belegt" wird bis zu einer dynamischen Gewichtsänderung auf 10Kg gehalten. Dies ergibt eine sehr stabile Detektion, ohne Fehldetektion. Selbst wenn sich die Auslöseempfindlichkeit durch Temperaturänderung um 20% erhöht, wird eine Fehldetektion durch leichte Gegenstände sicher unterdrückt.

Unter einem Triggersignal ist ein Signal zu verstehen, das bei einem auslösenden Ereignis einen Impuls oder einen Schaltvorgang erzeugt.

Das Triggersignal des Sensorelements des Drucksensors, das für einen Sitzbelegungszustand herangezogen wird, wird an eine Auswerteeinheit weitergegeben und entsprechend verarbeitet.

Das Triggersignal für den Zustand "belegt" wird durch den Einschaltvorgang eines zweiten Sensorelements erzeugt, und dies wird in der Regel durch eine Person hervorgerufen, die auf dem Sitz Platz genommen hat.

Das Triggersignal für den Zustand "unbelegt" wird durch den Ausschaltvorgang mindestens eines ersten Sensorelementes, das eine hohe Auslöseempfindlichkeit aufweist, erzeugt.

Liegen Gegenstände auf der Sitzfläche des Polsterkerns und befindet sich die Belegungserfassungseinrichtung im Zustand "unbelegt", kann zwar die Schaltschwelle eines mindestens einen ersten Sensorelements, das eine hohe Auslöseempfindlichkeit aufweist, überschritten werden, jedoch reichen diese Gewichte der Gegenstände nicht aus, um die Schaltschwelle des zweiten Sensorelements, das eine niedrigere Auslöseempfindlichkeit aufweist, zu erreichen bzw. zu überschreiten.

Erst wenn der Fahrzeugsitz durch eine Person belegt wird, wird die Schaltschwelle des mindestens einen ersten Sensorelements, aber auch die Schaltschwelle des mindestens einen zweiten Sensorelements, überschritten. Daraus wird der Zustand "belegt" des Sitzes abgeleitet, indem das Signal, das durch das zweite Sensorelement geliefert wird, als Triggersignal für den belegten Zustand dient.

Sollte eine Schwankung der Gewichtskraft, die auf den Sitz durch eine darauf sitzende Person einwirkt, auftreten, zum Beispiel aufgrund von Bodenunebenheiten während der Fahrt mit einem Fahrzeug, und sollte dadurch die Schaltschwelle des mindestens einen zweiten Sensorelements mit der niedrigen Auslöseempfindlichkeit unterschritten werden, allerdings die Gewichtskraft noch über der Schaltschwelle des mindestens einen ersten Sensorelements liegen, dann bleibt der Zustand "belegt" bestehen. Dieser Zustand wird beibehalten, bis die auf den Fahrzeugsitz einwirkende Gewichtskraft soweit reduziert wird, dass die Schaltschwelle des ersten Sensorelements unterschritten wird. Ein solches Unterschreiten der Schaltschwelle des ersten Sensorelements erzeugt ein Triggersignal für den Zustand "unbelegt" und tritt in der Regel erst dann ein, wenn die Person den Sitz verlässt.

In einer Ausgestaltung umfasst der mindestens eine Drucksensor mindestens zwei räumlich voneinander getrennte Sensorgruppen. Die eine Sensorgruppe weist das mindestens eine erste Sensorelement und/oder die andere das mindestens eine zweite Sensorelement auf. Sind mehrere Sensorelemente zu einer Sensorgruppe zusammengefasst, so sind diese Sensorelemente dieser Sensorgruppe elektrisch miteinander verschaltet. Mit einer solchen Anordnung ist es möglich, noch stabilere Detektionsergebnisse zu erhalten.

Bevorzugt sind in einer derartigen Ausgestaltung mindestens zwei erste Sensorelemente in der einen Sensorgruppe und mindestens zwei zweite Sensorelemente in der anderen Sensorgruppe vorhanden. Durch eine großflächigere Verteilung der Sensorelemente ist eine stabilere über die Sitzfläche ortsunabhängige Detektion des Gewichtes der Person möglich.

Jede Sensorgruppe kann beispielsweise aus zwei Sensorelementen bestehen.

In einer anderen Ausgestaltung der Belegungserfassungseinrichtung sind mehrere erste Sensorelemente vorhanden und diese ersten Sensorelemente sind in Reihe geschaltet. Der Zustand "belegt" wird erst dann zurückgesetzt, wenn mindestens eines dieser in Reihe geschalteten Sensorelemente zurückgesetzt wird.

Falls eine von dem Drucksensor räumlich getrennt angeordnete Auswerteeinheit vorgesehen ist, wird dieser Auswerteeinheit mindestens ein Ausgangssignal von dem mindestens einen ersten Sensorelement und mindestens ein Ausgangssignal von dem mindestens einen zweiten Sensorelement zugeführt.

Für einen kompakten Aufbau kann die Auswerteeinheit unmittelbar in oder auf dem Drucksensor angeordnet werden, so dass sie mit dem Drucksensor eine Einheit bildet.

Wird ein Drucksensor zwischen Polsterkern und der den Polsterkern aufnehmenden Struktur, beispielsweise eine Metallstruktur, angeordnet, so hat es sich als vorteilhaft erwiesen, die Sensorelemente entlang einer Achse anzuordnen, die senkrecht zu einer Fläche verläuft, die durch die Ebene einer der Sitzfläche zugeordneten Rückenlehne aufgespannt ist. Somit ist eine genauere Detektion einer auf dem Fahrzeugsitz sitzenden Person möglich. Je nach Beschaffenheit und Ausgestaltung eines Polsterkerns und der des Polsterkerns aufnehmenden Struktur können aber auch Drucksensoranordnungen außerhalb dieser Achse vorteilhaft sein.

Bei einer derartigen Anordnung haben sich fünf Sensorelemente als ausreichend erwiesen. wobei die Anzahl der ersten Sensorelemente mit der hohen Empfindlichkeit größer ist als die Anzahl der zweiten Sensorelemente mit der niedrigen Empfindlichkeit. Durch diese unterschiedliche Anzahl der ersten Sensorelemente und der zweiten Sensorelemente ergibt sich die Möglichkeit, die ersten Sensorelemente in Fahrtrichtung weisend auf dem Drucksensor anzuordnen und die zweiten Sensorelemente dahinter anzuordnen, um so eine nach vorne rutschende Person noch einwandfrei detektieren zu können, oder den Drucksensor auch bei nicht optimaler Sitzposition der auf dem Sitz befindlichen Person noch auf dem Zustand "belegt" zu halten.

In bestimmten Situationen kann es auftreten, dass sich die Gewichtsverhältnisse auf der Sitzfläche in kurzer Zeit von einem Zustand in einen anderen Zustand ändern, sie aber wieder in den Ausgangszustand zurückkehren. Eine solche Situation kann beispielsweise dann auftreten, wenn ein Fahrzeug mit hoher Geschwindigkeit über unebene Strecken fährt. Damit dadurch nicht plötzlich und somit verfrüht der vorherige Zustand "belegt" in einen Zustand "unbelegt" geändert wird, kann die Auswerteeinheit das Ausgangssignal auch zeitverzögert von "belegt" auf "unbelegt" ändern. Eine solche Schaltverzögerung wird auf einen Wert zwischen 0,02 und 2 Sekunden, bevorzugt auf einen Wert zwischen 0,3 und 1 Sekunde, eingestellt.

Weitere Einzelheiten und Merkmale der Erfindung ergeben sich aus der nachfolgenden Beschreibung von Ausführungsbeispielen anhand der Zeichnung. In der Zeichnung zeigt
- Figur 1: ein Diagramm, das ein typisches Schaltverhalten eines ersten und eines zweiten Sensorelements eines Drucksensors mit den verschiedenen Schaltzuständen darstellt,
- Figur 2: ein Beispiel für einen Drucksensor, der zwei Sensorgruppen aufweist, wobei jede Sensorgruppe zwei Schaltelemente umfasst,
- Figur 3: den Drucksensor der Figur 2, allerdings mit einer gegenüber der Ausführungsform der Figur 2 unterschiedlich in den Sensorgruppen in Bezug auf deren Empfindlichkeit verteilten Sensorelementen,
- Figur 4: eine Draufsicht auf einen Polsterkern mit Drucksensor,
- Figur 5: eine Draufsicht eines Drucksensors, der eine Mehrzahl in einer Reihe angeordneter Sensorelemente aufweist, und
- Figur 6: eine mögliche Verschaltung von Sensorgruppen eines Drucksensors, wie er in Figur 5 dargestellt ist.

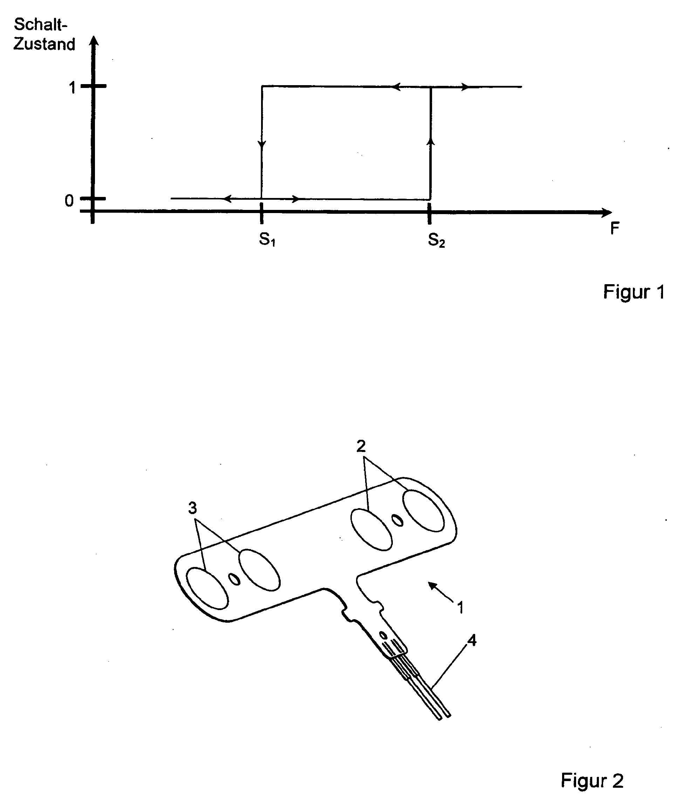

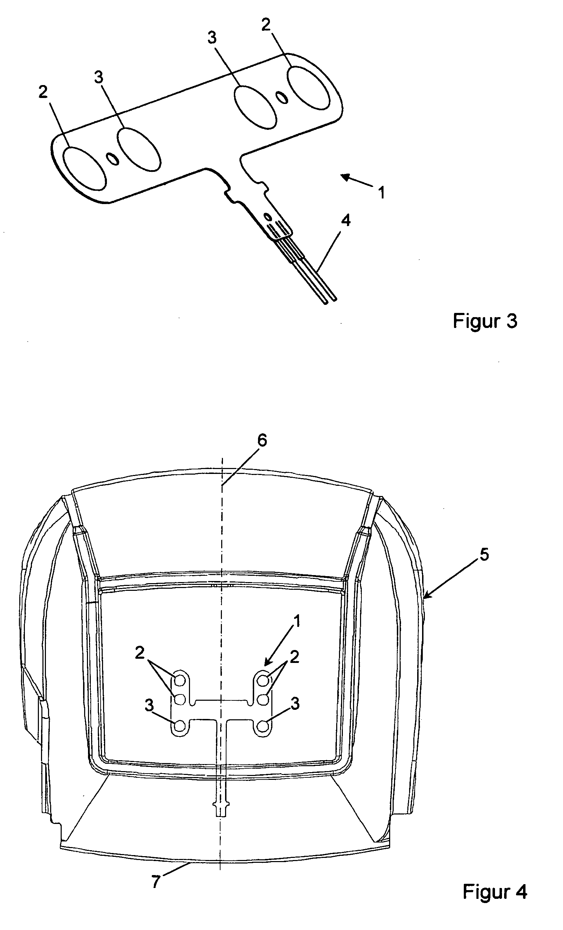

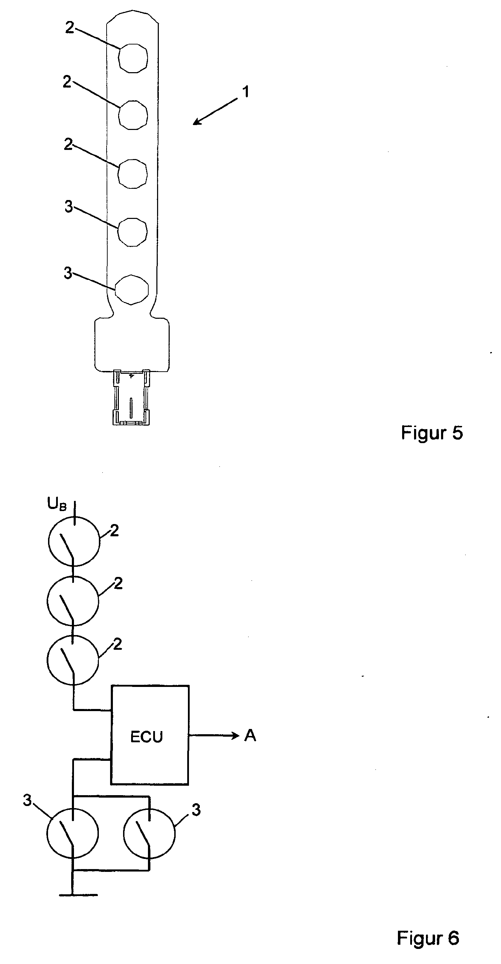

Die erfindungsgemäße Belegungserfassungseinrichtung dient zum Detektieren des Belegungszustandes eines Sitzes, insbesondere eines Kraftfahrzeugsitzes. Eine solche Belegungserfassungseinrichtung weist mindestens einen Drucksensor 1 auf, wie sie in den Figuren 2 bis 5 dargestellt sind. Jeder dieser Drucksensoren 1 umfasst mindestens ein erstes Sensorelement 2 und mindestens ein zweites Sensorelement 3. Die Ausführungsformen des Drucksensors 1, die in den Figuren 2 und 3 dargestellt sind, besitzen jeweils zwei erste Sensorelemente 2 und jeweils zwei zweite Sensorelemente 3, während die Ausführungsform der Figur 4 vier erste Sensorelemente 2 und zwei zweite Sensorelemente 3 umfasst. Die Ausführungsform, wie sie in Figur 5 gezeigt ist, besitzt dagegen insgesamt fünf Sensorelemente, die sich aus drei ersten Sensorelementen 2 und zwei zweiten Sensorelementen 3 zusammensetzen.

Wesentlich ist, dass die ersten Sensorelemente 2 jeweils eine erste Auslöseempfindlichkeit durch eine erste durch Druck ausgeübte Schaltschwelle S₁ haben und dass die zweiten Sensorelemente 3 eine zweite Auslöseempfindlichkeit durch eine zweite durch Druck ausgeübte Schaltschwelle S₂ aufweisen.

Die erste Auslöseempfindlichkeit ist dabei höher als die zweite Auslöseempfindlichkeit und entsprechend ist die erste Schaltschwelle S₁ niedriger als die zweite Schaltschwelle S₂.

Eine Belegungserfassungseinrichtung, die beispielsweise, in der einfachsten Bauart, nur ein erstes Sensorelement 2 und nur ein zweites Sensorelement 3 umfasst, arbeitet in einer Art und Weise, die in Figur 1 dargestellt ist. Hierzu sind in dem Diagramm auf der horizontalen Achse die Kraft F und auf der vertikalen Achse die Belegungszustände "0" (für nicht belegt) und "1" (für belegt) aufgetragen.

Bei einem unbelegten Sitz befinden sich folglich das erste Sensorelement 2 sowie das zweite Sensorelement 3 in dem Schaltzustand "0". Wenn sich eine Person auf dem Sitz niederlässt, wird zunächst die Schaltschwelle S₁ des ersten Sensorelements 2 erreicht, ohne dass dies eine Folge auf die Änderung des Zustands "unbelegt" hat. Wenn sich die Person nun mit ihrem gesamten Gewicht auf dem Sitz niederlässt, steigt die auf den Drucksensor 1 ausgeübte Kraft F an, bis die Schaltschwelle S₂ des zweiten Sensorelements 3 erreicht ist. Das Erreichen der zweiten Schaltschwelle S₂ löst ein Triggersignal aus, so dass der Schaltzustand des Drucksensors 1 auf den Wert "1", das bedeutet "belegt", gesetzt wird. Falls nun die durch das Gewicht der Person ausgeübte Kraft noch weiter ansteigt, hat dies keine weitere Auswirkung auf den nun auf "1" gesetzten Schaltzustand. Wenn sich die Person dann aber von dem Sitz erhebt, um beispielsweise nur die Sitzposition zu verändern, und dadurch die auf den Drucksensor 1 ausgeübte Kraft geringer wird, wird der Schaltzustand "1" auch dann beibehalten, wenn die Schaltschwelle S₂ des zweiten Sensorelements 3 unterschritten wird. Erst wenn die Person den Sitz verlässt, beispielsweise aus dem Fahrzeug aussteigt, wird die Kraft F, die der Schaltschwelle S₁ des ersten Sensorelements 2 entspricht, erreicht bzw. unterschritten, wodurch der eine Sitzbelegung anzeigende Zustand auf den Zustand "0" zurückgesetzt wird. Ein solches Setzen bzw. Zurücksetzen kann beispielsweise durch ein Flip-Flop erfolgen.

Eine Überprüfung bzw. Zuordnung der zusammen geschalteten Sensorelemente ist über verschiedene diskrete oder gedruckte Bauteile auf dem Drucksensor realisierbar.

Durch diesen Drucksensor 1 ist gewährleistet, dass ein Belegungszustand nur dann auf einen Nichtbelegungszustand zurückgesetzt wird, wenn die Schaltschwelle S₁ des Sensorelements 2 mit der hohen Empfindlichkeit wieder unterschritten wird.

Um sicherzustellen, dass eine Zurücksetzung des Belegungszustandes nicht erfolgt, wenn der Wert der Schaltschwelle S₁ des ersten Sensorelements 2 nur für ein sehr kurzes Zeitintervall unterschritten wird, kann für die Zurücksetzung des Belegungszustands auf "0" eine Zeitverzögerung von 0,02 bis 2 Sekunden, vorzugsweise von 0,3 bis 1 Sekunde, vorgesehen werden.

Als Drucksensoren 1 werden vorzugsweise Foliendrucksensoren eingesetzt, wie sie auch in den Figuren 2 bis 5 dargestellt sind.

Der Drucksensor 1 der Figur 2 umfasst insgesamt vier Sensorelemente 2, 3, die jeweils in zwei Gruppen mit zwei Sensorelementen zusammengefasst sind. Während die eine Gruppe zwei erste Sensorelemente 2 mit der hohen Auslöseempfindlichkeit umfasst, umfasst die andere Gruppe zwei zweite Sensorelemente 3 mit der niedrigen Auslöseempfindlichkeit, nämlich einer Auslöseempfindlichkeit, die niedriger ist als diejenige der ersten Sensorelemente 2.

Gegenüber der Ausführungsform der Figur 2 sind die vier Sensorelemente 2, 3 ebenfalls in zwei Sensorgruppen, wie sie in Figur 3 dargestellt, zusammengefasst. Lediglich die Anordnung der Sensorelemente bzw. der Sensorgruppen auf dem Drucksensor ist unterschiedlich gegenüber der Figur 2. Ebenfalls weist eine Sensorgruppe zwei erste Sensorelemente 2 mit der hohen Auslöseempfindlichkeit und die andere Sensorgruppe weist zwei zweite Sensorelemente 3 mit der niedrigen Auslöseempfindlichkeit auf. Eine solche Anordnung sollte gewählt werden, um eine Erweiterung der Detektionsfläche zu erreichen.

Es ist darauf hinzuweisen, dass ein solcher Drucksensor 1, wie er in den Figuren 2 und 3 dargestellt ist, nicht mehr als zwei Gruppen der Sensorelemente umfassen kann. Die Positionierung der Sensorelemente auf dem Drucksensor hängt von der Art des Sitzes bzw. der Sitzstruktur ab, um den Druck bzw. die Kraft, entsprechend durch eine auf der Sitzfläche des Polsterkerns sitzenden Person ausgeübt, optimal zu detektieren.

Die Drucksensoren 1, die in den Figuren 2 und 3 dargestellt sind, besitzen Anschlussleitungen 4, über die der Drucksensor 1 bzw. die Sensorelemente mit einer nicht näher dargestellten Auswerteeinheit verbunden sind.

Die Figur 4 zeigt eine Draufsicht auf einen Polsterkern 5, auf dem ein Drucksensor 1 angeordnet ist. Dieser Drucksensor 1 besitzt sechs Sensorelemente 2, 3, die in zwei Gruppen aufgeteilt sind, wobei die eine Gruppe vier erste Sensorelemente 2 und die andere Gruppe zwei zweite Sensorelemente 3 umfasst. Jeweils die Hälfte der in einer Sensorgruppe befindlichen Sensorelemente 2, 3 ist symmetrisch beidseitig einer Achse 6 und mit Abstand zu dieser positioniert, die senkrecht zu einer Fläche verläuft, die durch die Ebene einer der Sitzfläche zugeordneten Rückenlehne aufgespannt ist; diese Ebene ist in Figur 4 mit dem Bezugszeichen 7 gekennzeichnet. Die Gruppe der Sensorelemente 2 des Drucksensors 1 in Figur 4 ist so angeordnet, dass jeweils zwei der vier ersten Sensorelemente 2, die mit der hohen Auslöseempfindlichkeit, senkrecht links und rechts in einem Abstand zu der Achse 6 in Richtung der Vorderkante der Sitzfläche des Polsterkerns angeordnet sind und die Gruppe mit den zwei zweiten Sensorelementen 3, die die niedrige Auslöseempfindlichkeit aufweisen, jeweils fluchtend hinter den beiden Sensorelementen 2 entsprechend links und rechts in einem Abstand zu der Achse 6 in Richtung der Rückenlehne 7 der Sitzfläche des Polsterkerns angeordnet ist. Durch diese Aufteilung der Sensorelemente 2 und 3 in Gruppen wird erreicht, dass der Zustand "belegt" gegeben ist, solange sich eine Person auf dem Sitz während des Fahrbetriebs befindet, auch wenn diese Person auf der Sitzfläche des Polsterkerns nach vorne rutscht bzw. sich verschiebt.

Die Figur 5 zeigt die Ausführungsform eines Drucksensors 1, wiederum eines Foliendrucksensors, bei dem fünf Sensorelemente 2, 3 jeweils zu zwei Gruppen zusammengefasst sind, dabei weist die eine Gruppe die Sensorelemente 2 und die andere Gruppe die Sensorelemente 3 jeweils auf. Die Sensorelemente 2, 3 sind auf dem Drucksensor längs hintereinander angeordnet.

Ein solcher Drucksensor 1 könnte entlang der Achse 6 eines Polsterkerns 5 eines Sitzes angeordnet werden, wie dies in Figur 4 für den dort gezeigten Drucksensor 1 dargestellt ist. Der in Figur 5 dargestellte Drucksensor eignet sich dabei auch zur Anbringung zwischen einem Polsterkern und einer den Polsterkern aufnehmenden Struktur. Von den fünf Sensorelementen sind drei Sensorelemente solche Sensorelemente 2 mit hoher Auslöseempfindlichkeit und zwei Sensorelemente sind solche Sensorelemente 3 mit niedriger Auslöseempfindlichkeit. In Bezug auf den Polsterkern 5, wie ihn die Figur 4 zeigt, befinden sich die beiden Sensorelemente 3 mit der niedrigen Auslöseempfindlichkeit weiter zu der Position der Rückenlehne hin (Bezugszeichen 7), während die drei Sensorelemente 2 mit der hohen Auslöseempfindlichkeit zu dem vorderen Rand der Sitzfläche bzw. des Polsterkerns 5 hin positioniert sind. Durch diese Positionierung der ersten und zweiten Sensorelemente 2, 3 wird erreicht, dass der Zustand "belegt" immer gegeben ist, solange sich eine Person auf dem Sitz während des Fahrbetriebs befindet, auch wenn sich diese Person auf der Sitzfläche des Polsterkerns nach vorne bewegt bzw. sich setzt.

Die Figur 6 zeigt ein Schaltbild für einen Drucksensor, wie er in Figur 5 gezeigt ist, mit drei ersten Sensorelementen 2 mit hoher Auslöseempfindlichkeit und zwei zweiten Sensorelementen 3 mit niedriger Auslöseempfindlichkeit. Diese Schaltungsanordnung wird mit einer Betriebsspannung U_{B} versorgt. Die drei ersten Sensorelemente 2 sind in Reihe geschaltet, während die beiden zweiten Sensorelemente 3 parallel geschaltet sind. Die Sensorelemente 2, 3 sind in zwei Gruppen aufgeteilt, wobei die eine Gruppe aus den Sensorelementen 2 und die andere Gruppe aus den Sensorelementen 3 besteht. Diese beiden Gruppen sind getrennt mit einer Auswerteeinheit verbunden und geben ein entsprechendes Triggersignal an die Auswerteeinheit ab. Der Zustand "belegt" wird am Ausgang "A" der Auswerteeinheit erhalten, wenn nur eines der parallel geschalteten Sensorelemente 3 seine Schaltschwelle erreicht, während der Zustand "unbelegt" am Ausgang "A" der Auswerteeinheit vorliegt, wenn nur eines der in Reihe geschalteten Sensorelemente 2 seine Schaltschwelle unterschreitet. Das Triggersignal wird einer Auswerteeinheit ECU zugeführt, die das Ausgangssignal "A" bereitstellt.

## Patentansprüche

1. Verfahren zum Detektieren des Belegungszustandes eines Sitzes, der eine Belegungserfassungseinrichtung mit mindestens einem Drucksensor (1), der mindestens ein erstes Sensorelement (2) und mindestens ein zweites Sensorelement (3) umfasst, aufweist, wobei der Drucksensor (1) zwischen einem Sitzbezug und einem Polsterken (5) positioniert Ist und wobei die Sensorelemente (2, 3) ein entsprechendes Triggersignal in Abhängigkeit eines Sitzbelegungszustandes bereitstellen, und mit einer die Triggersignale verarbeitenden Auswerteeinheit, **dadurch gekennzeichnet, dass** dem ersten Sensorelement (2) eine erste Auslöseempfindlichkeit durch eine erste durch Druck ausgeübte Schaltschwelle (S₁) und dem zweiten Sensorelement eine zweite Auslöseempfindlichkeit durch eine zweite durch Druck ausgeübte Schaltschwelle (S₂) zugeordnet wird, wobei die erste Auslöseempfindlichkeit höher ist als die zweite Auslöseempfindlichkeit und entsprechend die erste Schaltschwelle (S₁) niedriger ist als die zweite Schaltschwelle (S₂), wobei das Erreichen der zweiten Schaltschwelle (S₂) als das Triggersignal für einen Sitzbelegungszustand herangezogen wird und an die Auswerteeinheit weitergegeben und verarbeitet wird, und dieser Zustand erst dann zurückgesetzt wird, wenn die erste Schaltschwelle (S₁) des mindestens einen ersten Sensorelements (2) wieder unterschritten wird.

2. Sitz mit einer Belegungserfassungseinrichtung zur Durchführung des Verfahrens nach Anspruch 1 zum Detektieren des Belegungszustandes eines Sitzes, mit mindestens einem Drucksensor (1), der mindestens ein erstes Sensorelement (2) und mindestens ein zweites Sensorelement (3) umfasst, wobei der Drucksensor (1) zwischen einem Sitzbezug und einem Polsterkern (5) positioniert ist und wobei die Sensorelemente (2, 3) ein entsprechendes Triggersignal in Abhängigkeit eines Sitzbelegungszustandes bereitstellen, und mit einer die Triggersignale verarbeitenden Auswerteeinheit, **dadurch gekennzeichnet, dass** das erste Sensorelement (2) eine erste Auslöseempfindlichkeit durch eine erste durch Druck ausgeübte Schaltschwelle (S₁) und das zweite Sensorelement eine zweite Auslöseempfindlichkeit durch eine zweite durch Druck ausgeübte Schaltschwelle (S₂) aufweisen, wobei die erste Auslöseempfindlichkeit höher ist als die zweite Auslöseempfindlichkeit und entsprechend die erste Schaltschwelle (S₁) niedriger ist als die zweite Schaltschwelle (S₂), wobei das Erreichen der zweiten Schaltschwelle (S₂) als das Triggersignal für einen Sitzbelegungszustand herangezogen wird und an die Auswerteeinheit weitergegeben und verarbeitet wird, und dieser Zustand erst dann zurückgesetzt wird, wenn die erste Schaltschwelle (S₁) des mindestens einen ersten Sensorelements (2) wieder unterschritten wird.

3. Sitz nach Anspruch 2, **dadurch gekennzeichnet, dass** der mindestens eine Drucksensor (1) mindestens zwei räumlich voneinander getrennte erste Sensorelemente (2) und/oder mindestens zwei räumlich getrennte zweite Sensorelemente (3) umfasst, wobei sowohl die ersten als auch die zweiten Sensorelemente (2, 3) jeweils elektrisch zu Sensorgruppen verschaltet sind.

4. Sitz nach Anspruch 3, **dadurch gekennzeichnet, dass** jede Sensorgruppe aus zwei Sensorelementen (2; 3) besteht.

5. Sitz nach einem der Ansprüche 2 bis 4, **dadurch gekennzeichnet, dass** mehrere erste Sensorelemente (2) vorhanden sind und diese ersten Sensorelemente (2) in Reihe geschaltet sind.

6. Sitz nach einem der Ansprüche 2 bis 5, **dadurch gekennzeichnet, dass** der Drucksensor (1) mindestens ein Ausgangssignal von dem mindestens einen ersten Sensorelement (2) und mindestens ein Ausgangssignal von dem mindestens einen zweiten Sensorelement (3) für eine räumlich getrennte Auswerteeinheit bereitstellt.

7. Sitz nach einem der Ansprüche 2 bis 5, **dadurch gekennzeichnet, dass** die Auswerteeinheit auf dem Drucksensor (1) angeordnet ist.

8. Sitz nach einem der Ansprüche 3 bis 5, **dadurch gekennzeichnet, dass** die Sensorelemente (2; 3) entlang einer Achse (6) angeordnet sind, die senkrecht zu einer Fläche (7) verläuft, die durch die Ebene einer der Sitzfläche zugeordneten Rückenlehne aufgespannt ist.

9. Sitz nach einem der Ansprüche 3 bis 8, **dadurch gekennzeichnet, dass** maximal fünf Sensorelemente (2; 3) vorhanden sind, wobei die Anzahl der ersten Sensorelemente (2) größer ist als die Anzahl der zweiten Sensorelemente (3).

10. Sitz nach einem der Ansprüche 2 bis 9, **dadurch gekennzeichnet, dass** der Drucksensor (1) ein Foliendrucksensor ist.

## Claims

1. A method for detecting the occupation state of a seat which comprises an occupation detection device with at least one pressure sensor (1) that includes at least one first sensor element (2) and at least one second sensor element (3), wherein the pressure sensor (1) is positioned between a seat cover and a cushion core (5), and wherein the sensor elements (2, 3) provide a corresponding trigger signal in response to a seat occupation state, and with an evaluation unit processing the trigger signals, **characterized in that** the first sensor element (2) has assigned thereto a first trigger sensitivity by way of a first pressure-exerted switching threshold (S₁) and the second sensor element has assigned thereto a second trigger sensitivity by way of a second pressure-exerted switching threshold (S₂), wherein the first trigger sensitivity is higher than the second trigger sensitivity and the first switching threshold (S₁) is correspondingly lower than the second switching threshold (S₂), wherein the attainment of the second switching threshold (S₂) is used as the trigger signal for a seat occupation state and is passed to and processed at the evaluation unit, and said state will only be reset if the first switching threshold (S₁) of the at least one first sensor element (2) is not reached again.

2. A seat with an occupation detection device for performing the method according to claim 1 for detecting the occupation state of a seat, with at least one pressure sensor (1) that includes at least one first sensor element (2) and at least one second sensor element (3), wherein the pressure sensor (1) is positioned between a seat cover and a cushion core (5), and wherein the sensor elements (2, 3) provide a corresponding trigger signal in response to a seat occupation state, and with an evaluation unit processing the trigger signals, **characterized in that** the first sensor element (2) has a first trigger sensitivity by way of a first pressure-exerted switching threshold (S₁) and the second sensor element has a second trigger sensitivity by way of a second pressure-exerted switching threshold (S₂), wherein the first trigger sensitivity is higher than the second trigger sensitivity and the first switching threshold (S₁) is correspondingly lower than the second switching threshold (S₂), wherein the attainment of the second switching threshold (S₂) is used as the trigger signal for a seat occupation state and is passed to and processed at the evaluation unit, and said state will only be reset if the first switching threshold (S₁) of the at least one first sensor element (2) is not reached again.

3. The seat according to claim 2, **characterized in that** the at least one pressure sensor (1) comprises at least two spatially separated first sensor elements (2) and/or at least two spatially separated second sensor elements (3), wherein both the first and the second sensor elements (2, 3) are each electrically interconnected to form sensor groups.

4. The seat according to claim 3, **characterized in that** each sensor group consists of two sensor elements (2; 3).

5. The seat according to any one of claims 2 to 4, **characterized in that** there are plural first sensor elements (2), and said first sensor elements (2) are connected in series.

6. The seat according to any one of claims 2 to 5, **characterized in that** the pressure sensor (1) provides at least one output signal of the at least one first sensor element (2) and at least one output signal of the at least one second sensor element (3) for a spatially separated evaluation unit.

7. The seat according to any one of claims 2 to 5, **characterized in that** the evaluation unit is arranged on the pressure sensor (1).

8. The seat according to any one of claims 3 to 5, **characterized in that** the sensor elements (2; 3) are arranged along an axis (6) which extends perpendicular to an area (7) formed by the plane of a backrest assigned to the seat area.

9. The seat according to any one of claims 3 to 8, **characterized in that** not more than five sensor elements (2; 3) are provided, wherein the number of the first sensor elements (2) is greater than the number of the second sensor elements (3).

10. The seat according to any one of claims 2 to 9, **characterized in that** the pressure sensor (1) is a film pressure sensor.

## Revendications

1. Procédé pour détecter l'état d'occupation d'un siège présentant un dispositif de détection d'occupation comprenant au moins un capteur de pression (1), qui comporte au moins un premier élément de capteur (2) et au moins un deuxième élément de capteur (3), le capteur de pression (1) étant positionné entre un habillage de revêtement de siège et un noyau de rembourrage (5) et les éléments de capteur (2, 3) fournissant un signal de déclenchement correspondant, en fonction d'un état d'occupation du siège, et le dispositif de détection d'occupation comprenant également une unité de traitement de données, qui assure le traitement des signaux de déclenchement, **caractérisé en ce qu'**au premier élément de capteur (2) est associée une première sensibilité de déclenchement par un premier seuil de commutation (S₁) exercé par une pression, et au deuxième élément de capteur est associée une deuxième sensibilité de déclenchement par un deuxième seuil de commutation (S₂) exercé par une pression, et **en ce que** la première sensibilité de déclenchement est plus élevée que la deuxième sensibilité de déclenchement, le premier seuil de commutation (S₁) étant donc plus bas que le deuxième seuil de commutation (S₂), et le fait d'atteindre le deuxième seuil de commutation (S₂) est pris en considération comme étant le signal de déclenchement pour un état d'occupation du siège et est transmis à l'unité de traitement de données pour y être traité, et cet état est réinitialisé seulement lorsque l'on passe à nouveau en-dessous du premier seuil de commutation (S₁) dudit au moins un premier élément de capteur (2).

2. Siège comprenant un dispositif de détection d'occupation pour la mise en oeuvre du procédé selon la revendication 1, pour détecter l'état d'occupation d'un siège présentant un dispositif de détection d'occupation comprenant au moins un capteur de pression (1), qui comporte au moins un premier élément de capteur (2) et au moins un deuxième élément de capteur (3), le capteur de pression (1) étant positionné entre un habillage de revêtement de siège et un noyau de rembourrage (5) et les éléments de capteur (2, 3) fournissant un signal de déclenchement correspondant, en fonction d'un état d'occupation du siège, et le dispositif de détection d'occupation comprenant également une unité de traitement de données, qui assure le traitement des signaux de déclenchement, **caractérisé en ce que** le premier élément de capteur (2) présente une première sensibilité de déclenchement par un premier seuil de commutation (S₁) exercé par une pression, et le deuxième élément de capteur présente une deuxième sensibilité de déclenchement par un deuxième seuil de commutation (S₂) exercé par une pression, et **en ce que** la première sensibilité de déclenchement est plus élevée que la deuxième sensibilité de déclenchement, le premier seuil de commutation (S₁) étant donc plus bas que le deuxième seuil de commutation (S₂), et le fait d'atteindre le deuxième seuil de commutation (S₂) est pris en considération comme étant le signal de déclenchement pour un état d'occupation du siège et est transmis à l'unité de traitement de données pour y être traité, et cet état est réinitialisé seulement lorsque l'on passe à nouveau en-dessous du premier seuil de commutation (S₁) dudit au moins un premier élément de capteur (2).

3. Siège selon la revendication 2, **caractérisé en ce que** ledit au moins un capteur de pression (1) comprend au moins deux premiers éléments de capteur (2) séparés spatialement et/ou au moins deux deuxièmes éléments de capteur (3) séparés spatialement, aussi bien les premiers que les deuxièmes éléments de capteur (2, 3) étant respectivement commutés électriquement en groupes de capteurs.

4. Siège selon la revendication 3, **caractérisé en ce que** chaque groupe de capteurs est constitué de deux éléments de capteur (2; 3).

5. Siège selon l'une des revendications 2 à 4, **caractérisé en ce que** sont prévus plusieurs premiers éléments de capteur (2), et ces premiers éléments de capteur (2) sont montés en série.

6. Siège selon l'une des revendications 2 à 5, **caractérisé en ce que** le capteur de pression (1) fournit au moins un signal de sortie dudit au moins un premier élément de capteur (2) et au moins un signal de sortie dudit au moins un deuxième élément de capteur (3), pour une unité de traitement de données spatialement séparée.

7. Siège selon l'une des revendications 2 à 5, **caractérisé en ce que** l'unité de traitement de données est agencée sur le capteur de pression (1).

8. Siège selon l'une des revendications 3 à 5, **caractérisé en ce que** les éléments de capteur (2; 3) sont agencés le long d'un axe (6), qui s'étend perpendiculairement à une surface (7) formée par le plan d'un dossier associé à la surface d'assise.

9. Siège selon l'une des revendications 3 à 8, **caractérisé en ce qu'**au maximum sont prévus cinq éléments de capteur (2; 3), le nombre des premiers éléments de capteur (2) étant supérieur au nombre des deuxièmes éléments de capteur (3).

10. Siège selon l'une des revendications 2 à 9, **caractérisé en ce que** le capteur de pression (1) est un capteur de pression sous forme de film ou de feuille.
